# EUROPÄISCHE PATENTSCHRIFT

(11) **EP 1 040 032 B1**
(45) Veröffentlichungstag und Bekanntmachung des Hinweises auf die Patenterteilung: **27.02.2002**
(21) Anmeldenummer: 98959826.3
(22) Anmeldetag: 03.11.1998
(51) Int. Cl.: B60S 1/08

(54) **STEUEREINRICHTUNG FÜR EINE SCHEIBENWISCHEREINRICHTUNG**
CONTROL DEVICE FOR A WINDSCREEN WIPER DEVICE
SYSTEME DE COMMANDE POUR ESSUIE-GLACE

(30) Priorität: 19.12.1997 DE 19756504
(43) Veröffentlichungstag der Anmeldung: 04.10.2000
(73) Patentinhaber: DaimlerChrysler AG, 70567 Stuttgart (DE)
(72) Erfinder: BERGER, Josef, D-72649 Wolfschlugen (DE); BLESSING, Alf, D-73092 Heiningen (DE); MAUSER, Roland, D-71640 Ludwigsburg (DE); MÄCKEL, Rainer, D-53639 Königswinter (DE)
(74) Vertreter: Maute, Hans-Jürgen, Dipl.-Ing.
(86) Internationale Anmeldenummer: EP9806939
(87) Internationale Veröffentlichungsnummer: WO9932335

(56) Entgegenhaltungen:
- EP-A- 0 504 606
- EP-A- 0 786 385
- DE-A- 19 516 507
- DE-C- 3 926 175

## Beschreibung

Die Erfindung betrifft eine Steuereinrichtung gemäß dem Oberbegriff des unabhängigen Anspruchs.

Eine mit den Merhmalen des Oberbegriffs vergleichbare Steuereinrichtung, die neben der Regenmenge zumindest die Fahrzeuggeschwindigkeit eines damit ausgerüsteten Fahrzeugs berüchsichtigt, ist beispielsweise Gegenstand der DE 195 16 507 A1.

Für die Steuerung des Antriebsmotors einer Scheibenwischereinrichtung eines Kraftfahrzeugs ist eine Steuereinrichtung in Betracht gezogen worden, bei der eine Steuerschaltung mittels eines manuell zu betätigenden Wischerschalters aktivierbar ist. Der dem Lenkstock des Fahrzeugs zugeordnete Wischerschalter ist mehrstufig ausgebildet. Dabei wird in einer ersten Schaltstufe des Wischerschalters ein Antriebsmotor für die Scheibenwischereinrichtung entsprechend einer Kennlinie gesteuert, die abhängig vom Signal eines Regensensors abgefragt wird und den Antriebsmotor entsprechend steuert. Die hierbei für den Antriebsmotor hinterlegten Betriebsdaten haben den Steuerungsinhalt, daß im Anfangsbereich der Kennlinie der Antriebsmotor im Intervallbetrieb gefahren wird. Abhängig von der vom Regensensor detektierten, auf die zu wischende Scheibe auftreffenden Regenmenge wird dabei die Pausenzeit zwischen jedem Wischzyklus mit zunehmender Regenmenge vermindert. Unterschreitet die Pausenzeit einen vorgegebenen Wert, wird der Antriebsmotor in einen kontinuierlichen Dauerbetrieb umgeschaltet, wobei seine Drehzahl zunächst bei einem minimalen Wert liegt und mit weiter zunehmender Regenmenge bis zu einer Höchstdrehzahl mit entsprechend gesteigerter Wischzyklenzahl je Zeiteinheit hochgesteuert wird.

Der Erfindung liegt die Aufgabe zugrunde, bei einer Steuereinrichtung gemäß dem Oberbegriff des ersten Anspruchs Maßnahmen zu treffen, durch welche eine möglichst optimale Wischerfunktion bei unterschiedlichen auf das Fahrzeug einwirkenden Einflüssen, insbesondere Helligkeit, Temperatur, Blendung durch andere Verkehrsteilnehmer oder Lichtquellen und/oder Fahrgeschwindigkeit ermöglicht wird.

Die Lösung der Aufgabe erfolgt gemäß der Erfindung durch die kennzeichnenden Merkmale des ersten Anspruchs. Weitere Ausgestaltungen sind in zusätzlichen Ansprüchen oder in der Beschreibung angegeben.

Bei der Steuereinrichtung gemäß der Erfindung wird eine vorgegebene Standard-Kennlinie abhängig von auf das Fahrzeug von außen einwirkende Beleuchtungs- und/oder Temperatureinflüssen durch eine vorgegebene Grenz-Kennlinie ersetzt, so daß Betriebsdaten für den Antriebsmotor des Scheibenwischers geändert werden. Insbesondere ist eine Änderung der Betriebsdaten dann vorgesehen, wenn Umgebungsbedingungen, insbesondere Helligkeit, Temperatur und/oder Geschwindigkeit, jeweils von einem vorgegebenen Grenzwert abweichen, insbesondere diesen unterschreiten.

Hierzu ist vorzugsweise der Wischerschalter mit mehreren Schaltstufen ausgestattet, wobei der ersten Schaltstufe der automatische Kennlinienbetrieb und einer oder mehreren zusätzlichen Schaltstufe/n eine oder mehrere feste Drehzahl/en zugeordnet ist/sind, wobei während des Scheibenwischerbetriebs in der Steuerschaltung bei Unterschreiten der Grenzwerte für Temperatur und/oder Beleuchtungsstärke eine gegenüber einer Standard-Kennlinie geänderte Grenz-Kennlinie bereitgestellt wird, wobei die Kennlinien einen festen oberen Endpunkt aufweisen. Ein bevorzugter Grenzwert der Beleuchtungsstärke ist dabei die Beleuchtungsstärke, ab der üblicherweise bei Fahrzeugen das Fahrlicht eingeschaltet wird, wodurch eine Blendungsgefahr entsteht. Ein bevorzugter Grenzwert der Temperatur ist eine Temperatur um den Gefrierpunkt, da dann damit zu rechnen ist, daß mit Salz vermengtes Wasser auf die Scheibe des Fahrzeugs gelangt, was im Wischerbetrieb leicht zu einem Verschmieren der Scheibe führen kann und so die Blendgefahr erhöht und/oder die Sicht verschlechtert wird.

Dabei kann der Übergang von der Standard-Kennlinie zur Grenz-Kennlinie über Zwischenkennlinien zwischen Standard-Kennlinie und Grenz-Kennlinie zumindest quasikontinuierlich erfolgen, wobei Zwischenkennlinien, Standard- und Grenz-Kennlinien einen festen oberen Endpunkt (M) aufweisen. Zweckmäßigerweise wird die Schnelligkeit des Übergangs von einer Standard-Kennlinie zu einer Grenz-Kennlinie abhängig vom Grad der Abweichung der Temperatur und/oder der Beleuchtungsstärke von den jeweiligen Grenzwerten angepaßt, so daß auch in der Dämmerung und/oder bei langsam sinkender oder steigender Temperatur die Wischerfunktion möglichst optimal ist. Der Übergang von der Standard-Kennlinie zur geänderten Grenz-Kennlinie kann jedoch auch abrupt erfolgen.

Bei einer auf das Fahrzeug einwirkenden Beleuchtungsstärke unterhalb einer vorgegebenen Beleuchtungsstärke wird die Drehzahl des Antriebsmotors erhöht und/oder Intervallpausen des Wischerbetriebs verkürzt und/oder der Übergang von Intervallbetrieb zu kontinuierlichem Betrieb zu geringeren Regenmengen verschoben. Zweckmäßigerweise wird bei Temperaturen unterhalb einer Grenztemperatur die Drehzahl des Antriebsmotors erniedrigt und/oder die Intervallpausenzeit des Wischerbetriebs erhöht und/oder der Übergang von Intervallbetrieb zu kontinuierlichem Wischerbetrieb zu höheren Regenmengen verschoben. Bei einer Beleuchtungsstärke und einer Temperatur unterhalb der jeweiligen Grenzwerte ist es günstig, sowohl die Drehzahl des Antriebsmotors als auch Intervallpausen des Wischerbetriebs zu erhöhen und/oder der Übergang von Intervallbetrieb zu kontinuierlichem Wischerbetrieb zu geringeren Regenmengen zu verschieben. Besonders günstig ist, auch den Wischerbetrieb mit Scheibenwaschfunktion in entsprechender Weise zu steuern.

Bei einer vorteilhaften Weiterbildung einer Steuereinrichtung wird zusätzlich eine adaptive Wischkennlinie generiert, die mittels manuell betätigbarer Steuermittel verändert wird, wenn sie nicht den individuellen Bedürfnissen des Kraftfahrzeugbenutzers entspricht. Dabei kann bei Intervallbetrieb die Pausenzeit zwischen zwei Wischvorgängen verändert und/oder im anschließenden kontinuierlichen Wischbetrieb die Drehzahl des Antriebsmotors bzw. die Wischfrequenz erhöht oder erniedrigt werden. Hierzu ist vorzugsweise der Wischerschalter mit üblichen drei Schaltstufen ausgestattet, wobei der ersten Schaltstufe der automatische Kennlinienbetrieb zugeordnet ist, während der oder mehreren zusätzlichen Schaltstufe/n eine bzw. mehrere feste Drehzahl/en zugeordnet sind. Die in der Kennlinie werkseitig festgelegten Betriebsdaten für die Steuerung des Antriebsmotors der Scheibenwischereinrichtung sind durchschnittlichen Anforderungen entsprechend programmiert. Nach dem Einschalten des automatischen Kennlinienbetriebs wird dann abhängig von der von einem Regensensor festgestellten Regenmenge je Zeiteinheit selbsttätig bei geringen Regenmengen ein Intervallbetrieb mit großen Pausenzeiten gesteuert, wobei sich die Pausenzeiten mit zunehmender Regenmenge verringern und bei weiter ansteigender Regenmenge der Antriebsmotor in einen kontinuierlichen Betrieb übergeht, wobei dann die Drehzahl bis zu einem Maximalwert erhöht wird, wenn die Regenmenge entsprechend zunimmt.

Wenn die vorgegebene Kennlinie keine den persönlichen Wunschvorstellungen des Fahrers entsprechende Wischcharakterisitik steuert, kann eine Änderung der Kennlinie durch Einschalten der zusätzlichen Schaltstufen des Wischerschalters vorgenommen werden. Wenn dabei beispielsweise die Pausenzeiten im Intervallbetrieb zu lang bzw. die Wischfrequenz im stetigen Betrieb zu gering ist, dann braucht der Wischerschalter lediglich auf eine der weiteren Schaltstufen mit den fest vorgegebenen Drehzahlen umgeschaltet werden. Diese Schaltmaßnahme wird im Steuergerät erfaßt und mittels einer dadurch ausgelösten Anpassungs-Algorithmus-Steuerung die Neigung der Kennlinie vermindert. Dabei bleibt der Endpunkt der Kennlinie im maximalen Betriebspunkt des Antriebsmotors zumindest weitgehend fest. Durch dieses Hochschwenken der Kennlinie um den maximalen Arbeitspunkt werden die der Kennlinie zugeordneten Betriebsdaten für den Antriebsmotor so verändert, daß die Pausenzeiten bei Intervallbetrieb jeweils verkürzt und die Drehzahl des Antriebsmotors bzw. die Wischfrequenz des Scheibenwischers im Kennlinienabschnitt für kontinuierlichen Betrieb angehoben wird. Dabei kann ein Hochschalten des Wischerschalters aus der Schaltstufe 1 in die Schaltstufe 2 eine vorgegebene Änderung hervorrufen, während bei einem Durchschalten von Schaltstufe 1 nach Schaltstufe 3 eine demgegenüber stärkere Anhebung der Kennlinie gesteuert werden kann. Durch mehrmaliges Zurück- und erneutes Hochschalten des Wischerschalters kann dabei eine stufenweise Anhebung der Kennlinie bzw. die stufenweise Verminderung der Steigung mittels der Algorithmus-Steuerung herbeigeführt werden. Beim Zurückschalten des Wischerschalters in die erste Schaltstufe für automatischen Betrieb wird somit jeweils eine an die Bedürfnisse des Fahrers angenäherte Kennlinie für die regenabhängige Steuerung der Scheibenwischereinrichtung zur Verfügung gestellt.

Wenn dagegen der von der Regenmenge abhängige Arbeitspunkt auf der Kennlinie Betriebsdaten an den Antriebsmotor liefert, die eine für die individuellen Bedürfnisse des Fahrers zu hohe Wischfolge nach sich ziehen, dann ist ein Zurücknehmen der Kennliniendaten in der Weise möglich, daß die Neigung der Kennlinie wieder steiler zunimmt, die Pausenzeiten im Intervallbetrieb im Intervallbetrieb größer werden und die Wischfrequenz im darüberliegenden Kennlinienbereich verlangsamt wird. Hierbei wird davon ausgegangen, daß die aktuelle Kennlinie für den automatischen, regenmengenabhängigen Betrieb in einem Bereich angesteuert wird, der oberhalb der Wischzyklenzahl bzw. Drehzahl des Antriebsmotors liegt, die fest durch die Schaltstellung 2 des Wischerschalters vorgegeben wird. Schaltet demnach der Benutzer des Wischerschalter von der für Automatikbetrieb ausgelegten Schaltstellung 1 auf die Schaltstellung 2 um, dann liegen die durch die Schaltstellung 2 vorgegebenen Betriebsdaten unter den durch den aktuellen Kennlinien vorgegebenen Betriebsdaten. Das daraus gewonnenen Steuersignal bewirkt in der Algorithmus-Steuerung eine Verminderung der Betriebsdaten nicht nur für diesen Arbeitspunkt, sondern über die gesamte Kennlinienmenge. Dabei bleibt wiederum der der größten erfaßten Regenmenge zugeordnete höchste Betriebspunkt der Kennlinie unverändert. Es kann dabei jeweils eine neue Kennlinie bestimmt oder auf eine von mehreren fest vorgegebenen Kennlinien umgeschaltet werden. Zusätzlich kann dann, wenn der Wischerschalter in seine Null-Stellung geschaltet wird und der Regensensor bei laufendem Fahrzeugmotor noch immer eine nennenswerte Regenmenge an die Steuerschaltung signalisiert, aus einem daraus gewonnenen Steuerbefehl die Steigung der Kennlinie vergrößert bzw. deren Verlauf so geändert werden, daß die Pausenzeiten bei Intervallbetrieb vergrößert und die kontinuierlich ablaufenden Wischzyklen im oberen Kennlinienbereich vermindert werden.

Die Erfindung ist nachfolgend anhand von Prinzipdarstellungen näher erläutert. Es zeigen:
- Fig. 1: eine Schaltungsskizze einer Steuereinrichtung für eine Scheibenwischereinrichtung,
- Fig. 2: Prinzipdarstellungen zur Änderung einer der Steuereinrichtung zugeordneten Kennlinie
- Fig. 3: eine Schaltungsskizze einer Steuereinrichtung für eine Scheibenwischereinrichtung,
- Fig. 4: Prinzipdarstellungen zur Änderung einer einer vorteilhaften Weiterbildung der Steuereinrichtung zugeordneten Kennlinie und
- Fig. 5: eine Kennlinie mit unterschiedlichen Arbeitspunkten.

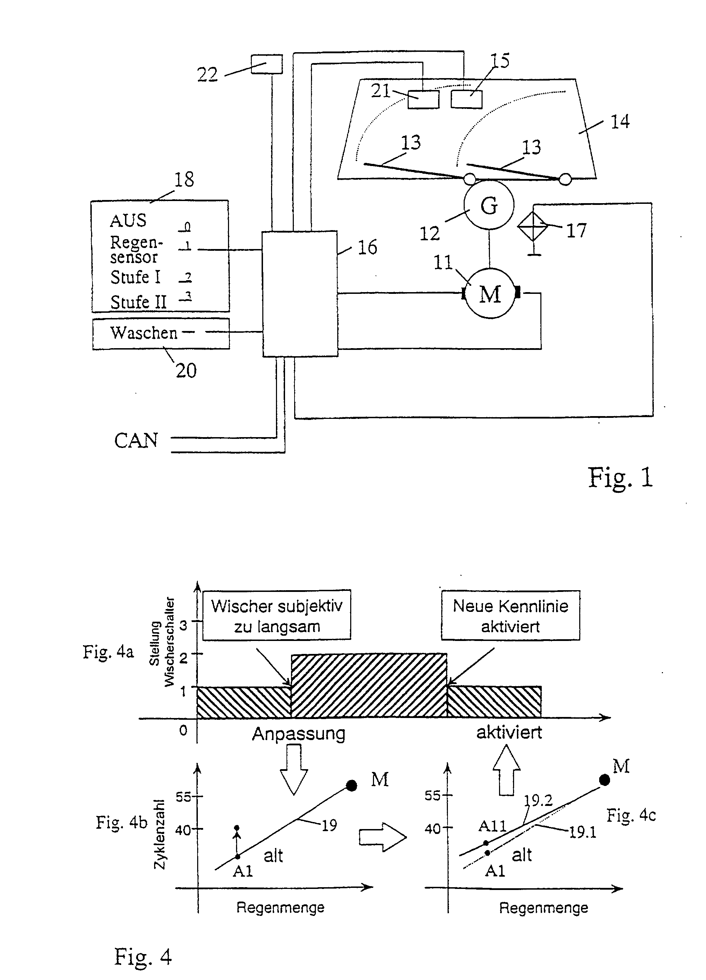

In Fig. 1 ist eine Steuereinrichtung für einen Antriebsmotor 11 dargestellt, welche mittels eines Getriebes 12 Scheibenwischern 13 hin- und hergehende Wischzyklen aufprägt. Die Scheibenwischer 13 liegen auf einer zu wischenden Scheibe 14 auf, der ein Regensensor 15 zugeordnet ist. Der Regensensor 15 liefert ein elektrisches Steuersignal, das abhängig von der Regenmenge pro Zeiteinheit ist, welche auf dem von ihm überdeckten Scheibenbereich auftrifft. Das von der Regenmenge abhängige Steuersignal wird einer Steuerschaltung 16 zugeführt. Über eine Meßeinheit 17 kann die Steuerschaltung 16 die aktuelle Drehzahl des Scheibenwischermotors 11 und damit die Wischzyklenzahl bestimmen. Zusätzlich ist als Eingabeeinheit noch ein Schalter für eine Scheibenwascheinrichtung 20 angeordnet und ein Wischerschalter 18 direkt oder über ein Bus-System an die Steuerschaltung 16 angeschlossen, der üblicherweise als Lenkstockschalter an der Lenksäule des betreffenden Fahrzeugs gehalten ist und der neben einer Stellung Null für die Außerbetriebsetzung des Antriebsmotors 11 weitere zu- und rückschaltbare Schaltstufen 1, 2, 3 für unterschiedliche Betriebszustände aufweist. Ein optischer Sensor 21, der vorzugsweise an der Scheibe und benachbart zum Regensensor 15 angeordnet ist, bestimmt die Umgebungshelligkeit und/oder die Blendung. Vorteilhaft ist, sowohl die Regensensorfunktion als auch den Sensor zur Helligkeits- und Blendungsbestimmung in einem optischen Sensor zu vereinen. Ein Temperaturfühler 22 übergibt der Steuerschaltung 16 die ermittelten Außentemperaturwerte. Die in der Steuerschaltung 16 abgelegte Kennlinie, die den Zusammenhang zwischen Regenmenge und Wischgeschwindigkeit bzw. Intervallpausenzeit beschreibt, wird in Abhängigkeit von den Daten der Sensoren 21 und 22 so angepaßt, daß eine möglichst optimale Wischgeschwindigkeit eingestellt wird.

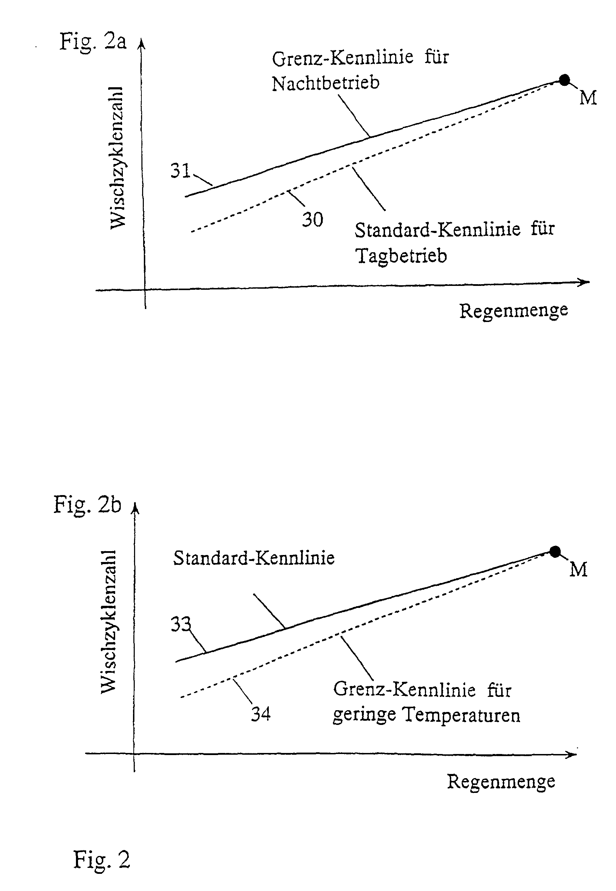

In einer ersten Schaltstufe 1 wird der Antriebsmotor 11 bei Tageslicht entsprechend einer Kennlinie 30 gesteuert, die in der Steuerschaltung 16 als Standard-Kennlinie 30 für Tageslicht abgelegt ist und die abhängig von der vom Regensensor 15 ermittelten Regenmenge Betriebsdaten für den Antriebsmotor 11 vorgibt. Dies ist in Fig. 2a dargestellt. Gemäß den in der Kennlinie 30 abgelegten Betriebsdaten wird der Antriebsmotor 11 bei einer vom Regensensor 15 erfaßten geringen Regenmenge im Intervallbetrieb betrieben, wobei nach jedem Wischzyklus aus einer hin- und hergehenden Schwenkbewegung für den Scheibenwischer 13 eine Pausenzeit bis zur Ausführung des nächsten Wischzyklus eintritt. Mit zunehmender Regenmenge wird die jeweilige Pausenzeit verkürzt. Sobald die Pausenzeit einen bestimmten Wert unterschreitet, wird durch die Kennlinie 30 bei entsprechend gesteigerter Regenmenge ein Dauerbetrieb des Antriebsmotors 11 bei minderer Drehzahl gesteuert. Bei weiter steigender erfaßter Regenmenge wird auch die Drehzahl des Antriebsmotors 11 zu höheren Werten hin verstellt, bis sie bei großer Regenmenge ihren Maximalwert M erreicht. Bei abnehmender Regenmenge erfolgt die Steuerung des Antriebsmotors 11 in entgegengesetzter Richtung. Bei einer Anpassung der Kennlinie an die Umgebungshelligkeit muß mit abnehmender Beleuchtungsstärke die Kennlinie verschoben werden. Hierbei müssen sowohl die Intervallpausenzeiten verkürzt, der Übergang zwischen Intervallwischen und Dauerwischen zu geringeren Benetzungsgraden bzw. Regenmengen hin verlegt werden und die Kennlinie für Dauerwischen angehoben werden. Dies bedeutet, daß bei konstanter Scheibenbenetzung mit zunehmender Dunkelheit die Wischgeschwindigkeit erhöht wird. Entweder kann bei Unterschreiten eines vorgegebenen Grenzwerts der Beleuchtungsstärke von einer Standard-Kennlinie 30 für den Tag auf eine Grenz-Kennlinie 31 für die Nacht umgeschaltet werden. Bei der Kennlinienanpassung bleibt vorzugsweise der Punkt M, der die maximale Drehzahl des Motors 11 repräsentiert, unverändert. Es kann jedoch auch eine Kennlinienanpassung erfolgen, bei der dieser Punkt verändert wird.

Durch Berücksichtigung der Außentemperaturen, die am oder im Fahrzeug durch einen Temperaturfühler 22 bestimmt werden kann, kann die Standard-Kennlinie im Wischbetrieb abgesenkt werden. Dies ist in Fig. 2b dargestellt. Bei einem konstanten Benetzungsgrad bzw. einer konstanten Regenmenge wird unterhalb einer Grenztemperatur, vorzugsweise um den Gefrierpunkt (0°C), die Wischgeschwindigkeit verringert. Die Temperatur ist dabei nur ein Indiz dafür, daß auf der Fahrbahn mit hoher Wahrscheinlichkeit Salz vorhanden ist, welches durch andere Fahrzeuge hochgewirbelt wird und auf die Scheibe 14 trifft, wo dadurch bei Wischerbetrieb die Gefahr des Verschmierens der Scheibe 14 entsteht.

Falls bei Dunkelheit und Temperaturen unter dem Gefrierpunkt der Wischer betätigt werden soll, muß eine der Betriebsbedingungen Dunkelheit oder Kälte, d.h. Salz auf der Fahrbahn, Vorrang zugewiesen werden.

Unterschiedliche Geschwindigkeiten des Fahrzeugs führen zu unterschiedlichen Tropfengrößen auf der Scheibe. Um einen optimale Wischfunktion zu erhalten, ist es daher zweckmäßig, die gefahrene Geschwindigkeit und/oder die durchschnittliche Tropfengröße auf der Scheibe 14 des Fahrzeugs ebenfalls als Eingangsgröße/n für die Kennlinienanpassung vorzusehen.

Günstig ist, die Kennlinienanpassung auch auf die Waschfunktion des Wischers 18 anzuwenden. Dabei wird unter zusätzlicher Benetzung der Scheibe ein oder mehrere Waschzyklen ausgelöst.

Der Übergang von der Standard-Kennlinie 30, 33 zur Grenz-Kennlinie 31, 34 kann quasikontinuierlich, vorzugsweise über Zwischenkennlinien zwischen der Standard-Kennlinie 30, 33 und der Grenz-Kennlinie 31, 34, an sich langsam verändernde Helligkeit und/oder Temperatur angepaßt werden oder einfach bei Unterschreiten des Grenzwerts abrupt umgeschaltet werden.

Eine weitere vorteilhafte Maßnahme ist, nicht nur in Schaltstufe 1 mit Automatikbetrieb bei mindestens einer weiteren anderen Schaltstellung, insbesondere Schaltstufe 2 (sogen. Stufe I des Wischers) und/oder 3 (sogen. Stufe II des Wischers) ebenfalls eine Änderung der Drehzahl des Antriebsmotors 11 vorzusehen. Günstig ist, die Drehzahl für den Nachtbetrieb in Stufe I von z.B. 40 Zyklen/Minute auf 45 Zyklen/Minute anzuheben.

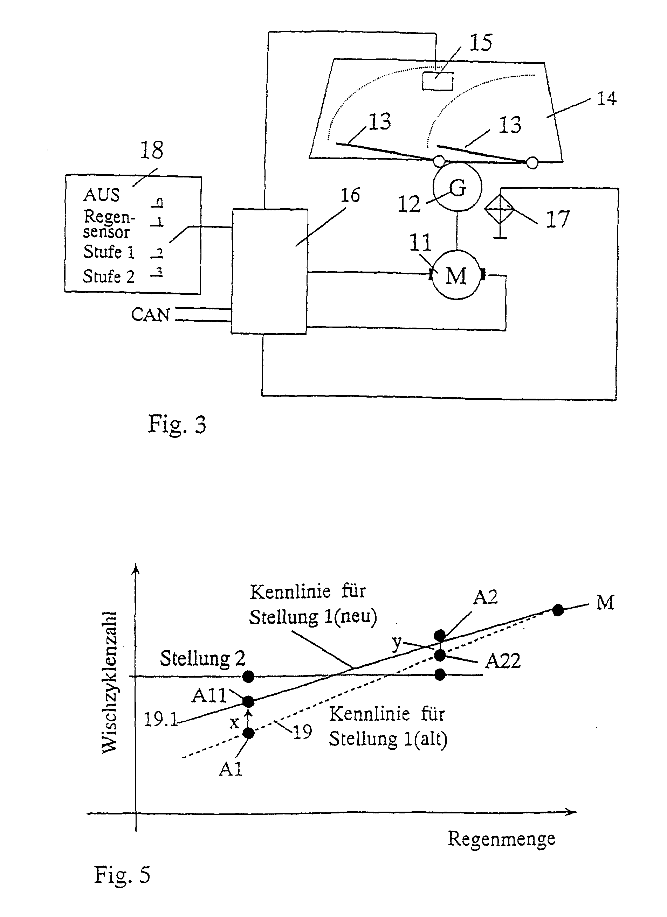

Eine Steuereinrichtung für einen Antriebsmotor 11 prägt mittels eines Getriebes 12 Scheibenwischern 13 hin- und hergehende Wischzyklen auf (Fig. 3). Temperatursensor 22 und Beleuchtungssensor 21 aus Fig. 1 sind hier nicht weiter dargestellt. Die Scheibenwischer 13 liegen auf einer zu wischenden Scheibe 14 auf, der ein Regensensor 15 zugeordnet ist. Der Regensensor 15 liefert ein elektrisches Steuersignal, das abhängig von der Regenmenge pro Zeiteinheit ist, welche auf dem von ihm überdeckten Scheibenbereich auftrifft. Das von der Regenmenge abhängige Steuersignal wird einer Steuerschaltung 16 zageführt. Über eine Meßeinheit 17 kann die Steuerschaltung 16 die aktuelle Drehzahl des Scheibenwischermotors 11 und damit die Wischzyklenzahl bestimmen. Zusätzlich ist als Eingabeeinheit noch ein Wischerschalter 18 direkt oder über ein Bus-System an die Steuerschaltung 16 angeschlossen, der üblicherweise als Lenkstockschalter an der Lenksäule des betreffenden Fahrzeugs gehalten ist und der neben einer Stellung Null für die Außerbetriebsetzung des Antriebsmotors 11 weitere zu- und rückschaltbare Schaltstufen 1, 2, 3 für unterschiedliche Betriebszustände aufweist. In einer ersten Schaltstufe 1 wird der Antriebsmotor 11 entsprechend einer Kennlinie 19 gesteuert, die in der Steuerschaltung 16 abgelegt ist und die abhängig von der vom Regensensor 15 ermittelten Regenmenge Betriebsdaten für den Antriebsmotor 11 vorgibt. Kennlinie 19 entspricht sowohl Standard-Kennlinien wie die Standard-Kennlinien 30, 33 als auch Grenz-Kennlinien 31, 34. Gemäß den in der Kennlinie 19 abgelegten Betriebsdaten wird der Antriebsmotor 11 bei einer vom Regensensor 15 erfaßten geringen Regenmenge im Intervallbetrieb betrieben, wobei nach jedem Wischzyklus aus einer hin- und hergehenden Schwenkbewegung für den Scheibenwischer 13 eine Pausenzeit bis zur Ausführung des nächsten Wischzyklus eintritt. Mit zunehmender Regenmenge wird die jeweilige Pausenzeit verkürzt. Sobald die Pausenzeit einen bestimmten Wert unterschreitet, wird durch die Kennlinie 19 bei entsprechend gesteigerter Regenmenge ein Dauerbetrieb des Antriebsmotors 11 bei minderer Drehzahl gesteuert. Bei weiter steigender erfaßter Regenmenge wird auch die Drehzahl des Antriebsmotors 11 zu höheren Werten hin verstellt, bis sie bei großer Regenmenge ihren Maximalwert M erreicht. Bei abnehmender Regenmenge erfolgt die Steuerung des Antriebsmotors 11 in entgegengesetzter Richtung.

Unabhängig vom automatischen, regenmengenabhängigen Steuervorgang kann mittels des Wischerschalters 18 durch Umschalten in die zweite Schaltstufe 2 eine feste Drehzahl für den Antriebsmotor 11 und bei weiterem Hochschalten in die Schaltstufe 3 eine erhöhte Drehzahl eingeschaltet werden. Die Schaltstufe 2 gibt hier beispielsweise eine Wischzyklenzahl von 40 Wischvorgängen pro Minute und die Schaltstufe 3 eine Wischzyklenzahl von 55 Wischvorgängen pro Minute entsprechend den einschlägigen Vorschriften vor. Dabei liegt die maximale Drehzahl des Antriebsmotors 11 im regenmengenabhängigen Betrieb der Schaltstufe 1 höher als die Drehzahl in der Schaltstufe 3.

Um eine Änderung der durch die Kennlinie 19 vorgegebenen Wischcharakteristik entsprechend den Bedürfnissen des Fahrers zu ermöglichen, ist die Steuerschaltung 16 mit einer Algorithmus-Anpassungs-Steuerung ausgestattet, welche die Kennliniendaten bei Eingabe entsprechender Steuerbefehle dauerhaft verändert.

Hierzu wird der Wischerschalter 18 herangezogen und dabei ausgewertet, wenn der Fahrer die bei automatischem Wischerbetrieb in Schaltstufe 1 vorgegebenen Betriebsdaten durch Umschalten in die Schaltstufe 2 oder 3 verändert. Die daraus abgeleiteten Steuerbefehle werden in der Algorithmus-Anpassungs-Steuerung ausgewertet.

Wenn gemäß Fig. 4a der Wischer 13 subjektiv zu langsam oder zu selten arbeitet, schaltet der Fahrer den Wischerschalter 18 auf Dauerbetrieb in Schaltstufe 2 oder 3. In Fig. 4b ist dieser Umschaltvorgang für die Schaltstufe 2 ausgehend von der Kennlinie 19 für einen Arbeitspunkt A1 dargestellt. Das aus der Umschaltung abgeleitete Steuersignal bewirkt in der Algorithmus-Anpassungs-Steuerung gemäß Figur 4c eine Anhebung des Arbeitspunktes A1 in den neuen Arbeitspunkt A11 und zugleich die Neuberechnung von Betriebsdaten für eine gesamte neue Kennlinie 19.1 mit verminderter Steigung, aber gleichem Endpunkt M bei der größten zu erfassenden Regenmenge. Die Kennlinie 19 wird somit um den Drehpunkt M im Uhrzeigersinn verschwenkt, wobei die Anhebung vom Betriebspunkt A1 auf den Betriebspunkt A11 geringer ist, als der Absolutwert des Steuerbefehls zwischen dem Arbeitspunkt A1 und der Zyklenzahl je Zeiteinheit entsprechend der Schaltstufe 2. Dabei ist es möglich, daß bei einem direkten Hochschalten aus der Schaltstellung 1 in die Schaltstellung 3 die Anhebung des Arbeitspunkts um einen größeren Betrag erfolgt, als bei einer Umschaltung von Schaltstufe 1 nach Schaltstufe 2. Wenn danach der Wischerschalter wieder in die Schaltstufe 1 fiir automatischen Betrieb zurückgeschaltet wird, erfolgt die Steuerung des Antriebsmotors entsprechend der neuen Kennlinie 19.1 mit verkürzten Pausenzeiten im Intervallbetrieb bzw. erhöhter kontinuierlicher Wischzyklenzahl bei größeren Regenmengen.

Diese Kennlinie bleibt solange erhalten, als keine Umschaltung in die Schaltstufen 2 oder 3 für erforderlich erachtet wird. Dabei werden bei einem Umschaltvorgang vorzugsweise die Betriebsdaten nicht zu stark verändert, vorzugsweise nicht um mehr als 50%. Bewirkt eine Hochschaltung in die Schaltstufen 2 oder 3 nur mehr eine geringfügige Änderung, vorzugsweise von weniger als 5%, wird eine weitere Kennlinienumrechnung zweckmäßigerweise nicht mehr durchgeführt. Dabei kann es auch zweckmäßig sein, eine veränderte Kennlinie nur dann als neue Kennlinie in die Steuerschaltung zu übernehmen, wenn die Rückschaltung der manuellen Steuermittel auf die kennliniengesteuerte erste Schaltstufe innerhalb eines vorgegebenen Zeitraumes erfolgt. Es kann aber auch zweckmäßig sein, in der Steuerschaltung mehrere voneinander unabhängige Kennlinien abrufbar abzulegen. Dabei kann es vorteilhaft sein, die einzelnen Kennlinien über die manuell betätigbaren Steuermittel, vorliegend durch den Wahlschalter abrufbar abzulegen.

In Figur 5 ist die Änderung der Kennlinie vom Arbeitspunkt A1 zum Arbeitspunkt A11 nochmals dargestellt. Zusätzlich ist dort angezeigt, daß eine Vergrößerung der Neigung der aktuellen Kennlinie 19.1 beispielsweise auf die Neigung entsprechend der ursprünglichen Kennlinie 19 dann mittels Wischerschalter 18 möglich ist, wenn der regenmengengesteuerte Arbeitspunkt A2 Betriebsdaten vorgibt, die über den Betriebsdaten der in Stellung 2 vorgegebenen Werte liegt. Wird hierbei der Wischerschalter 18 demnach von der automatischen Schaltstufe 1 auf die Schaltstellung 2 mit der fest vorgegebenen Drehzahl geschaltet, ist das daraus abgeleitete Steuersignal negativ und gibt einen neuen Arbeitspunkt A22 vor, der vorliegend zufällig auf der ursprünglichen Kennlinie 19 liegt. Die Algorithmus-Anpassungs-Steuerung in der Steuerschaltung 16 generiert somit zu diesem Arbeitspunkt A22 die dann aktuelle Kennlinie 19, die Betriebsdaten für den Antriebsmotor 11 vorgibt, die eine verminderte Zyklenzahl pro Zeiteinheit bzw. im Intervallbetrieb eine Vergrößerung der Pausenzeit steuert. Die gleiche Funktion der Neigungsvergrößerung läßt sich auch dadurch herbeiführen, daß der Wischerschalter von der Regenautomatikstufe 1 bei noch eingeschalteter Zündung bzw. laufendem Fahrzeugantriebsmotor in die Null-Stellung geschaltet wird und der daraus gewonnene Steuerbefehl der Algorithmus-Anpassungs-Steuerung mitgeteilt wird.

Die adaptive Anpassung der Kennlinie kann sowohl auf der Standard-Kennlinie 30, 33 als auch auf der Grenz-Kennlinie 31, 34 durchgeführt werden, so daß auch bei Helligkeit oder Dunkelheit oder bei hohen und tiefen Temperaturen eine subjektiv verbesserte Wischfunktion des Scheibenwischers erzielbar ist.

Selbstverständlich ist es auch möglich, unabhängig vom Wischerschalter betätigbare Steuermittel zur Beeinflussung der Kennlinienneigung oder zur Auswahl einzelner unterschiedlicher Kennlinien vorzusehen, die vom Benutzer des Fahrzeugs oder von einer Kundendienststelle betätigt werden. Die Auswahl einer fahrerspezifischen Kennlinie kann dabei auch dann erfolgen, wenn die Fahrzeugsteuerung Memoryfunktionen für Sitzverstellung, Spiegeleinstellung oder eine Zündschlüsselcodierung verarbeitet. Mit dem Aufruf einer dieser fahrerabhängigen Funktionen kann die zugehörige Kennlinie für den Wischerbetrieb ausgewählt werden.

Eine vorteilhafte Weiterbildung ist, beim Umschalten des Lenkstockschalters in die Stufe AUS zu unterscheiden, ob der Benutzer tatsächlich nur den Scheibenwischer 13 ausschalten möchte, oder ob ihm die Intervallpausen zu kurz erscheinen, d.h. daß bei eine aktuellen, geringen Regenmenge größere Intervallpausenzeiten gefordert sind. Wird der Schalter ausgeschaltet, weil die Intervallpausenzeiten zu kurz erscheinen, dann ist eine Anpassung der Kennlinie 19 vorteilhaft, falls tatsächlich das Wischen beendet werden soll, ist eine Anpassung unnötig. Um diese beiden Fälle zu unterscheiden, wird nach dem Umschalten des Schalters auf die Stellung AUS für eine begrenzte Zeit, insbesondere höchstens 1 Minute, der Regensensor 15 weiterhin ausgelesen. Wird vom Regensensor 15 kein Regen mehr erkannt, dann wird angenommen, daß der Schalter tatsächlich ausgeschaltet wurde. Übersteigt die in der begrenzten Zeit gemessene Regenmenge einen vorgegebenen Schwellwert, so wird angenommen, daß die Intervallpausenzeit zu kurz war, und die Kennlinie 19 wird adaptiv nachgeführt.

Insgesamt ergibt sich somit eine Steuereinrichtung für den Antriebsmotor einer Scheibenwischereinrichtung, bei der eine regenmengenabhängige Kennlinie zur Steuerung des Antriebsmotors nachträglich veränderbar ist, wobei die Betriebsdaten des Antriebsmotors abhängig von Umgebungsbedingungen verändert werden können. Dies erhöht sowohl den Komfort des Fahrzeugs als auch die Sicherheit im Straßenverkehr bei schwierigen Verkehrsbedingungen. Zusätzlich können zur Eingabe von entsprechenden Steuerbefehlen manuell betätigbare Steuermittel genutzt werden. Diese Steuermittel können vorzugsweise durch den ohnehin vorhandenen mehrstufigen Wischerschalter des Fahrzeugs gebildet sein. Dabei wird in Bezug auf die aktuelle Kennlinie im momentan durch die ermittelte Regenmenge vorgegebenen Arbeitspunkt festgestellt, ob bei weiteren Schalthandlungen demgegenüber vom Nutzer eine höhere oder niedrigere Wischzyklenzahl angestrebt wird. Aus dieser Information wird dann eine entsprechende Änderung der Steigung bzw. des Verlaufs der Kennlinie abgeleitet.

## Patentansprüche

1. Steuereinrichtung für den Antriebsmotor (11) einer Scheibenwischeinrichtung (13) eines Fahrzeugs, insbesondere eines Kraftfahrzeugs, mit einem manuell zu betätigenden Wischerschalter (18), der mehrere Schaltstufen (1, 2, 3) aufweist,
wobei der ersten Schaltstufe (1) ein automatischer Kennlinienbetrieb und den weiteren Schaltstufen (2, 3) feste Drehzahlen zugeordnet sind, mit einer mit dem Wischerschalter (18) aktivierten Steuerschaltung (16), die den Antriebsmotor (11) in der ersten Schaltstufe (1) des Wischerschalters (7) entsprechend einer Kennlinie automatisch steuert, wobei ein Regensensor (15), ein Beleuchtungssensor (21), und ein Temperatursensor (22) mit der Steuerschaltung (16) verbunden sind, und wobei in der Steuerschaltung (16) Kennlinien enthalten sind, die Betriebsdaten für den Antriebsmotor (11) in Abhängigkeit von Ausgangssignalen des Regensensors (15), des Beleuchtungssensors (21) und des Temperatursensors (22) enthalten,
**dadurch gekennzeichnet,**
**daß** in der Steuerschaltung (16) eine regenmengenabhängige Standardkennlinie (30, 33) abgelegt ist und daß die Steuerschaltung (16) während des Scheibenwischerbetriebs in der ersten Schaltstufe bei Unterschreiten mindestens eines Grenzwerts für Temperatur oder Beleuchtungsstärke eine gegenüber einer Standard-Kennlinie (30, 33) geänderte Grenz-Kennlinie (31, 34) bereitstellt, wobei diese Kennlinien (30, 31, 33, 34) einen festen oberen Endpunkt (M) aufweisen.

2. Steuereinrichtung nach Anspruch 1,
**dadurch gekennzeichnet,**
**daß** der Übergang von der Standard-Kennlinie (30, 33) zur Grenz-Kennlinie (31, 34) über Zwischenkennlinien zwischen Standard-Kennlinie und Grenz-Kennlinie zumindest quasikontinuierlich ist, wobei Zwischenkennlinien, Standard- und Grenz-Kennlinien (30, 31, 33, 34) den festen oberen Endpunkt (M) aufweisen.

3. Steuereinrichtung nach Anspruch 1 oder 2,
**dadurch gekennzeichnet,**
**daß** die Schnelligkeit des Übergangs von der Standard-Kennlinie (30, 33) zur Grenz-Kennlinie (31, 34) abhängig vom Grad der Abweichung der Temperatur und/oder der Beleuchtungsstärke von den jeweiligen Grenzwerten ist.

4. Steuereinrichtung nach Anspruch 1,
**dadurch gekennzeichnet,**
**daß** der Übergang von der Standard-Kennlinie (30, 33) zur geänderten Kennlinie (31, 34) abrupt ist.

5. Steuereinrichtung nach einem oder mehreren der vorangegangenen Ansprüche,
**dadurch gekennzeichnet,**
**daß** bei einer auf das Fahrzeug einwirkenden Beleuchtungsstärke unterhalb einer vorgegebenen Beleuchtungsstärke die Drehzahl des Antriebsmotors (11) erhöht und/oder In-. tervallpausen des Wischerbetriebs verkürzt und/oder der Übergang von Intervallbetrieb zu kontinuierlichem Betrieb zu geringeren Regenmengen verschoben ist.

6. Steuereinrichtung nach einem oder mehreren der vorangegangenen Ansprüche,
**dadurch gekennzeichnet,**
**daß** die Betriebsdaten des Antriebsmotors (11) bei Blendung veränderbar sind.

7. Steuereinrichtung nach einem oder mehreren der vorangegangenen Ansprüche,
**dadurch gekennzeichnet,**
**daß** bei Temperaturen unterhalb einer Grenztemperatur die Drehzahl des Antriebsmotors (11) erniedrigt und/oder die Intervallpausenzeit des Wischerbetriebs erhöht und/oder der Übergang von Intervallbetrieb zu kontinuierlichem Wischerbetrieb zu höheren Regenmengen verschoben ist.

8. Steuereinrichtung nach Anspruch 1 oder 7,
**dadurch gekennzeichnet,**
**daß** die Grenztemperatur etwa 0°C ist.

9. Steuereinrichtung nach einem oder mehreren der vorangegangenen Ansprüche,
**dadurch gekennzeichnet,**
**daß** bei einer Beleuchtungsstärke und einer Temperatur unterhalb der jeweiligen Grenzwerte sowohl die Drehzahl des Antriebsmotors (11) als auch Intervallpausen des Wischerbetriebs erhöht und/oder der Übergang von Intervallbetrieb zu kontinuierlichem Wischerbetrieb zu geringeren Regenmengen verschoben ist.

10. Steuereinrichtung nach einem oder mehreren der vorangegangenen Ansprüche,
**dadurch gekennzeichnet,**
**daß** die Betriebsdaten des Antriebsmotors (11) in einem Wischerbetrieb mit Scheibenwaschfunktion änderbar sind.

11. Steuereinrichtung nach einem oder mehreren der vorangegangenen Ansprüche,
**dadurch gekennzeichnet,**
**daß** die Betriebsparameter des Antriebsmotors (11) in allen Schaltstufen (1, 2, 3) änderbar sind.

12. Steuereinrichtung nach einem oder mehreren der vorangegangenen Ansprüche,
**dadurch gekennzeichnet,**
**daß** die Drehzahl des Antriebsmotors (11) in allen Schaltstufen (1, 2, 3) bei Unterschreiten des Grenzwerts der Beleuchtungsstärke erhöhbar ist.

13. Steuereinrichtung nach einem oder mehreren der vorangegangenen Ansprüche,
**dadurch gekennzeichnet,**
**daß** die Kennlinie (19) zusätzlich mittels manuell betätigbarer Steuermittel veränderbar ist.

14. Steuereinrichtung nach einem oder mehreren der vorangegangenen Ansprüche,
**dadurch gekennzeichnet,**
**daß** die Steuerschaltung (16) während des Scheibenwischerbetriebs zusätzlich einen Anpassungsalgorithmus für die Erzouging einer neten Kennlinie (19.1) durchgeführt wird, wobei die Kennlinie (19, 19.1) einen festen oberen Endpunkt (M) aufweist, und die Steigung bzw. der Verlauf der Kennlinie (19) analog der Differenz der durch die Kennlinie (19) aktuell vorgegebenen Betriebsdaten zu den durch die zusätzliche/n Schaltstellung/en (0, 2, 3) vorgegebenen Betriebsdaten verändert wird, wenn eine zusätzliche Schaltstellung (0, 2, 3) manuell eingeschaltet wird.

15. Steuereinrichtung nach einem oder mehreren der vorangegangenen Ansprüche,
**dadurch gekennzeichnet,**
**daß** die Steigung bzw. der Verlauf der Kennlinie (19) vermindert wird, wenn die von der aktuellen Kennlinie (19) vorgegebenen Betriebsdaten für den Antriebsmotor (11) niedriger als die durch die zusätzliche/n Schaltstufe/n (2, 3) vorgegebenen Betriebsdaten liegen und eine zusätzliche Schaltstellung (2, 3) manuell eingeschaltet wird.

16. Steuereinrichtung nach einem oder mehreren der vorangegangenen Ansprüche,
**dadurch gekennzeichnet,**
**daß** die Steigung bzw. der Verlauf der Kennlinie (19) erhöht wird, wenn die von der aktuellen Kennlinie (19.1) vorgegebenen Betriebsdaten für den Antriebsmotor (11) höher als die durch die zusätzliche/n Schaltstufe/n (0, 2, 3) vorgegebenen Betriebsdaten liegen und eine zusätzliche Schaltstellung (0, 2, 3) manuell eingeschaltet wird

17. Steuereinrichtung nach einem oder mehreren der vorangegangenen Ansprüche,
**dadurch gekennzeichnet,**
**daß** die veränderte Kennlinie nur dann als neue Kennlinie in der Steuerschaltung (16) übernommen wird, wenn die Rückschaltung der manuellen Steuermittel (18) innerhalb eines vorgegebenen Zeitraumes auf die kennliniengesteuerte erste Schaltstufe (1) erfolgt.

18. Steuereinrichtung nach einem oder mehreren der vorangegangenen Ansprüche,
**dadurch gekennzeichnet,**
**daß** die Änderung der von einer aktualisierten Kennlinie vorgegebenen Betriebsdaten von den Betriebsdaten der vorangegangenen Kennlinie auf nicht mehr als 50% begrenzt ist.

19. Steuereinrichtung nach einem oder mehreren der vorangegangenen Ansprüche,
**dadurch gekennzeichnet,**
**daß** eine Aktualisierung der Kennlinie so lange erfolgt, bis die Abweichung der Betriebsdaten aus zwei aufeinanderfolgenden generierten Kennlinien geringer als 5% ist.

20. Steuereinrichtung nach einem oder mehreren der vorangegangenen Ansprüche,
**dadurch gekennzeichnet,**
**daß** in der Steuereinrichtung (16) mehrere voneinander unabhängige Kennlinien abgelegt und aufrufbar sind.

21. Steuereinrichtung nach einem oder mehreren der vorangegangenen Ansprüche,
**dadurch gekennzeichnet,**
**daß** die einzelnen Kennlinien über manuell betätigbare Wahlschalter in der Steuereinrichtung individuell zur Steuerung der Betriebsdaten des Antriebsmotors aktivierbar sind.

## Claims

1. Control device for the drive motor (11) of a screen wiper device (13) of a vehicle, especially a motor vehicle, with a wiper switch (18), which is to be manually actuated, with several switching steps (1, 2, 3), wherein the first switching step (1) is associated with an automatic characteristic curve operation and the further switching steps (2, 3) are associated with fixed rotational speeds, with a control circuit (16) which is activated by the wiper switch (18) and which automatically controls the drive motor (11) in the first switching step (1) of the wiper switch (7) in correspondence with a characteristic curve, wherein a rain sensor (15), a lighting sensor (21) and a temperature sensor (22) are connected with the control circuit (16) and wherein characteristic curves containing operating data for the drive motor (11) in dependence on output signals of the rain sensor (15), the lighting sensor (21) and the temperature sensor (22) are contained in the control circuit (16), **characterised in that** a standard characteristic curve (30, 33) dependent on rain quantity is filed in the control circuit (16) and that the control circuit (16) during the screen wiper operation in the first switching step provides a limit characteristic curve (31, 34), which is changed relative to a standard characteristic curve (30, 31), in the case of falling below of at least one limit value for temperature or strength of lighting, wherein these characteristic curves (30, 31, 33, 34) have a fixed upper end point (M).

2. Control device according to claim 1, **characterised in that** the transition from the standard characteristic curve (30, 33) to the limit characteristic curve (31, 34) is at least quasi continuous by way of intermediate characteristic curves between standard characteristic curve and limit characteristic curve, wherein intermediate characteristic curve, standard characteristic curve and limit characteristic curve (30, 31, 33, 34) have the fixed upper end point (M).

3. Control device according to claim 1 or 2, **characterised in that** the rate of transition from the standard characteristic curve (30, 33) to the limit characteristic curve (31, 34) is dependent on the degree of deviation of the temperature and/or the strength of lighting from the respective limit values.

4. Control device according to claim 1, **characterised in that** the transition from the standard characteristic curve (30, 33) to the changed characteristic curve (31, 34) is abrupt.

5. Control device according to one or more of the preceding claims, **characterised in that** in the case of a lighting strength which acts on the vehicle and is below a predetermined lighting strength the rotational speed of the drive motor (11) is increased and/or pauses in the wiper operation are shortened and/or the transition from intermittent operation to continuous operation is displaced to smaller quantities of rain.

6. Control device according to one or more of the preceding claims, **characterised in that** the operating data of the drive motor (11) in variable in the case of dazzle.

7. Control device according to one or more of the preceding claims, **characterised in that** in the case of temperatures below a limit temperature the rotational speed of the drive motor (11) is lowered and/or the pause time of the wiper operation is increased and/or the transition from intermittent operation to continuous operation is displaced to higher quantities of rain.

8. Control device according to claim 1 or 7, **characterised in that** the limit temperature is about 0° C.

9. Control device according to one or more of the preceding claims, **characterised in that** in the case of a lighting strength and a temperature below the respective limit value not only the rotational speed of the drive motor (11), but also pauses in the wiper operation are increased and/or the transition from intermittent operation to continuous operation is displaced to smaller quantities of rain.

10. Control device according to one or more of the preceding claims, **characterised in that** the operating data of the drive motor (11) are changeable into a wiper operation with screen washing function.

11. Control device according to one or more of the preceding claims, **characterised in that** operating parameters of the drive motor (11) are variable in all switching steps (1, 2, 3).

12. Control device according to one or more of the preceding claims, **characterised in that** the rotational speed of the drive motor (11) can be increased in all switching steps (1, 2, 3) in the case of falling below of the limit value of the lighting strength.

13. Control device according to one or more of the preceding claims, **characterised in that** the characteristic curve (19) is additionally variable by means of manually actuable control means.

14. Control device according to one or more of the preceding claims, **characterised in that** the control circuit (16) during the screen washing operation additionally carries out an adaptation algorithm for the generation of a new characteristic curve (19.1), wherein the characteristic curve (19, 19.1) has a fixed upper end point (M) and the slope or course of the characteristic curve (19) is changed analogously to the difference of the operating data, which are actually preset by the characteristic curve (19), relative to the operating data, which are preset by the additional switching setting or settings (0, 2, 3), when an additional switching setting (0, 2, 3) is manually switched in.

15. Control device according to one or more of the preceding claims, **characterised in that** the slope or the course of the characteristic curve (19) is reduced when the operating data, which are preset by the actual characteristic curve (19), for the drive motor (11) lie lower than the operating data preset by the additional switching step or steps (2, 3) and an additional switching setting (2, 3) is manually switched in.

16. Control device according to one or more of the preceding claims, **characterised in that** the slope or the course of the characteristic curve (19) is increased when the operating data, which are preset by the actual characteristic curve (19.1), for the drive motor (11) lie higher than the operating data preset by the additional switching step or steps (0, 2, 3) and an additional switching setting (0, 2 3) is manually switched in.

17. Control device according to one or more of the preceding claims, **characterised in that** the changed characteristic curve is taken over as a new characteristic curve in the control circuit (16) only when the switching back of the manual control means (18) to the first switching step (1), which is controlled by characteristic curve, within a predetermined space of time.

18. Control device according to one or more of the preceding claims, **characterised in that** the change of the operating data preset by an actualised characteristic curve from the operating data of the present characteristic curve is limited to not more than 50%.

19. Control device according to one or more of the preceding claims, **characterised in that** an actualisation of the characteristic curve is continued until the deviation of the operating data from two successively generated characteristic curves is smaller than 5%.

20. Control device according to one or more of the preceding claims, **characterised in that** several mutually independent characteristic curves are filed, and can be called up, in the control device (16).

21. Control device according to one or more of the preceding claims, **characterised in that** the individual characteristic curves are individually activatable by way of manually actuable selector switches in the control device for control of the operating date of the drive motor.

## Revendications

1. Dispositif de commande pour le moteur d'entraînement d'un essuie-glace (13) d'un véhicule, notamment d'un véhicule automobile, comportant un commutateur d'essuie-glace pouvant être actionné manuellement, qui comporte plusieurs étages de commutation (1,2,3), parmi lesquels le premier étage de commutation (1) correspond à un fonctionnement automatique sur la base de courbes caractéristiques, et des vitesses de rotation fixes sont associées aux autres étages de commutation (2,3), et comportant un circuit de commande (16), qui est activé par le commutateur d'essuie-glace (18) et qui commande automatiquement le moteur d'entraînement (11) conformément à une courbe caractéristique, lorsque le commutateur d'essuie-glace (7) est dans un premier étage de commutation (1), et dans lequel un détecteur de pluie (15), un capteur d'éclairement (21) et un capteur de température (22) sont reliés au circuit de commande (16) et dans lequel le circuit de commande (16) contient les courbes caractéristiques, qui contiennent des données de fonctionnement pour le moteur d'entraînement (11) en fonction de signaux de sortie du détecteur de pluie (15), du capteur d'éclairement (21) et du capteur de température (22), **caractérisé en ce qu'**une courbe caractéristique standard (30,33), qui dépend de la quantité de flux, est mémorisée dans le circuit de commande (16) et que pendant le fonctionnement de l'essuie-glace dans le premier étage de commutation, lorsque la température ou l'intensité tombe au-dessous d'au moins une valeur limite d'éclairement, le circuit de commande (16) délivre une courbe caractéristique limite (31,34) modifiée par rapport à une courbe caractéristique standard (30,33), ces courbes caractéristiques (30,31,33,34) possédant un point d'extrémité supérieur fixe (M).

2. Dispositif de commande selon la revendication 1, **caractérisé en ce que** le passage de la courbe caractéristique standard (30,33) à la courbe caractéristique limite (31,34) s'effectue au moins d'une manière quasiment continue par l'intermédiaire de courbes caractéristiques intermédiaires entre la courbe caractéristique standard et la courbe caractéristique limite, les courbes caractéristiques intermédiaires, les courbes caractéristiques standards et les courbes caractéristiques (30,31,33,34) possédant le point d'extrémité supérieur fixe (M).

3. Dispositif de commande selon la revendication 1 ou 2, **caractérisé en ce que** la rapidité de la transition de la courbe caractéristique standard (30,33) à la courbe caractéristique limite (21,34) dépend du degré d'écart de la température et/ou de l'intensité d'éclairement vis-à-vis des valeurs limites respectives.

4. Dispositif de commande selon la revendication 1, **caractérisé en ce que** la jonction faisant passer de la courbe caractéristique standard (30,33) à la courbe caractéristique modifiée (31,34) est brusque.

5. Dispositif de commande selon l'une des revendications précédentes, **caractérisé en ce que**, pour une intensité d'éclairement agissant sur le véhicule inférieure à une intensité d'éclairement prédéterminée, la vitesse de sortie du moteur d'entraînement (11) augmente et/ou des pauses entre des intervalles de fonctionnement de l'essuie-glace sont raccourcies et/ou le passage du fonctionnement intermittent au fonctionnement continu est décalé vers des quantités de pluie plus faibles.

6. Dispositif de commande selon une ou plusieurs des revendications précédentes, **caractérisé en ce que** les données de fonctionnement du moteur d'entraînement (11) peuvent être modifiées lors de l'occultation.

7. Dispositif de commande selon une ou plusieurs des revendications précédentes, **caractérisé en ce que** pour des températures inférieures à une température limite, la vitesse de rotation du moteur d'entraînement (11) est réduite et/ou le temps de pause entre les intervalles de fonctionnement de l'essuie-glace et/ou le passage du fonctionnement intermittent au fonctionnement continu de l'essuie-glace est décalé vers des quantités de pluie plus importante.

8. Dispositif de commande selon la revendication 1 ou 7, **caractérisé en ce que** la température limite est égale à environ 0°C.

9. Dispositif de commande selon une ou plusieurs des revendications précédentes, **caractérisé en ce que** pour une intensité d'éclairement et une température inférieures aux valeurs limites respectives, aussi bien la vitesse de rotation du moteur d'entraînement (11) que des pauses entre intervalles de fonctionnement de l'essuie-glace augmentent et/ou le passage du fonctionnement intermittent au fonctionnement continu de l'essuie-glace sont décalées vers des quantités de pluie plus faibles.

10. Dispositif de commande selon une ou plusieurs des revendications précédentes, **caractérisé en ce que** les données de fonctionnement du moteur d'entraînement (11) peuvent être modifiées dans un fonctionnement de l'essuie-glace comportant une fonction de lavage de la vitre.

11. Dispositif de commande selon une ou plusieurs des revendications précédentes, **caractérisé en ce que** le paramètre de fonctionnement du moteur d'entraînement (11) peut être modifié dans tous les étages de commutation (1,2,3).

12. Dispositif de commande selon une ou plusieurs des revendications précédentes, **caractérisé en ce que** la vitesse de rotation du moteur d'entraînement (11) dans tous les étages de commutation (1,2,3) peut être accrue lorsque l'intensité d'éclairement tombe au-dessous de sa valeur limite.

13. Dispositif de commande selon une ou plusieurs des revendications précédentes, **caractérisé en ce que** la courbe caractéristique (19) peut être modifiée en supplément à l'aide de moyens de commande pouvant être actionnés manuellement.

14. Dispositif de commande selon une ou plusieurs des revendications précédentes, **caractérisé en ce que** pendant le fonctionnement de l'essuie-glace, le circuit de commande (16) exécute en supplément un algorithme d'adaptation pour la production d'une nouvelle courbe caractéristique (19.1), la courbe caractéristique (19,19.1) possédant un point d'extrémité supérieur fixe (M), et l'allure de la courbe caractéristique (19) est modifiée d'une manière analogue à la différence des données de fonctionnement actuellement prédéterminées par la courbe caractéristique (19), et est modifiée pour fournir les données de fonctionnement prédéterminées par la ou les positions de commutation supplémentaires (0,2,3), lorsqu'une position de commutation supplémentaire (0,2,3) est activée manuellement.

15. Dispositif de commande selon une ou plusieurs des revendications précédentes, **caractérisé en ce que** la pente ou l'allure de la courbe caractéristique (19) est réduite lorsque les données de fonctionnement, prédéterminées par la courbe caractéristique actuelle (19), pour le moteur d'entraînement (11) sont inférieures aux données de fonctionnement prédéterminées par le ou les étages de commutation supplémentaires (2,3) et une position de commutation supplémentaire (2,3) est activée manuellement.

16. Dispositif de commande selon une ou plusieurs des revendications précédentes, **caractérisé en ce que** la pente ou l'allure de la courbe caractéristique (19) est augmentée lorsque les données de fonctionnement, prédéterminées par la courbe caractéristique actuelle (19.1), pour le moteur d'entraînement (11) sont supérieures aux données de fonctionnement prédéterminées par le ou les étages de commutation supplémentaires (0,2,3) et une position de commutation supplémentaire (0,2,3) est activée manuellement.

17. Dispositif de commande selon une ou plusieurs des revendications précédentes, **caractérisé en ce que** la courbe caractéristique modifiée est utilisée en tant que nouvelle courbe caractéristique dans le circuit de commande (16) uniquement lorsque la commutation rétrograde des moyens de commande manuels (18) s'effectue en l'espace d'un intervalle de temps prédéterminé, sur le premier étage de commutation (1) commandé sur la base d'une courbe caractéristique.

18. Dispositif de commande selon l'une des revendications précédentes, **caractérisé en ce que** la modification des données de fonctionnement prédéterminées par une courbe caractéristique actualisée est limitée à pas plus de 50 % par les données de fonctionnement de la courbe caractéristique précédente.

19. Dispositif de commande selon une ou plusieurs des revendications précédentes, **caractérisé en ce qu'**une actualisation de la courbe caractéristique s'effectue jusqu'à ce que l'écart des données de fonctionnement à partir de deux courbes caractéristiques successives générées est inférieur à 5 %.

20. Dispositif de commande selon une ou plusieurs des revendications précédentes, **caractérisé en ce que** dans le dispositif de commande (16), plusieurs courbes caractéristiques indépendantes les unes des autres peuvent être mémorisées et appelées.

21. Dispositif de commande selon une ou plusieurs des revendications précédentes, **caractérisé en ce que** les différentes courbes caractéristiques peuvent être activées par l'intermédiaire d'un commutateur de sélection pouvant être actionné manuellement dans le dispositif de commande, et ce individuellement pour la commande des données de fonctionnement du moteur d'entraînement.
